Europäisches Patentamt

European Patent Office

Office européen des brevets

(11) Publication number: **0 345 899**
**A1**

## (12) EUROPEAN PATENT APPLICATION

(21) Application number: **89201448.1**

(51) Int. Cl.⁴: **A01B 29/04**

(22) Date of filing: **06.06.89**

(30) Priority: **10.06.88 NL 8801489**

(43) Date of publication of application:
**13.12.89 Bulletin 89/50**

(84) Designated Contracting States:
**DE FR GB NL**

(71) Applicant: **C. van der Lely N.V.**
**Weverskade 10 P.O. Box 26**
**NL-3155 ZG Maasland(NL)**

(72) Inventor: **van der Lely, Cornelis**
**7 Brüschenrain**
**Zug(CH)**

(74) Representative: **Mulder, Herman et al**
**Octrooibureau Van der Lely N.V. Weverskade**
**10 P.O. Box 26**
**NL-3155 ZG Maasland(NL)**

(54) **A soil cultivating machine.**

(57) The invention relates to a soil cultivating machine comprising at least one roller (11) to work the soil as well as scraper members (15) which include a plurality of parts that are interconnected otherwise than through welding. A scraper member (15) includes an arm (25) consisting of two parts (27) arranged alongside each other and mounted between the legs of a U-shaped support (18), which legs are detachable relative to each other. The scraper member arm (25) is arranged slidably between the legs of the U-shaped support (18). The arm (25) consists of two strips (27) arranged against each other, the front side of which is provided with a curved part constituting a support for the application of a scraper element (28).

Fig. 4

EP 0 345 899 A1

# A SOIL CULTIVATING MACHINE

The invention concerns a soil cultivating machine comprising at least one roller to work the soil as well as scraper members.

In prior art soil cultivating machines of the above-defined type, the scraper members are mostly arranged completely or at least partly through welding, as a result of which the cost of production may be raised considerably. Using the construction according to the invention, it is now possible to obviate this drawback in that a scraper member includes a plurality of parts which are interconnected otherwise than through welding. With such a design it is possible to obtain a rapid and simple production without the requirement of expensive provisions.

A further aspect of the invention concerns a soil cultivating machine of the above-defined type, wherein a scraper member includes an arm consisting of two parts arranged alongside each other. Using this provision, it is possible to produce the scraper member arm e.g. from strip-shaped material that can be brought quickly into the desired shape by punching.

A still further aspect of the invention concerns a soil cultivating machine of the above-defined type, wherein a scraper member arm is arranged in a U-shaped support and the legs of the U-shaped support are detachable relative to each other. Using this construction, it is possible to assemble the scraper member support from simply and rapidly produced parts, whereby the cost of production can be decreased.

A still further aspect of the invention concerns a soil cultivating machine of the above-defined type, wherein a scraper member support is arranged at a box-like carrier and between the box-like carrier and the support there is arranged a filling piece that is adapted to the profile of the box-like carrier. An effective attachment of the support can be obtained hereby.

A final aspect of the invention concerns a soil cultivating machine of the above-defined type, wherein a scraper member includes a scraper element which is bent in the shape of a V. Using this provision, it is possible to produce the scraper elements in a simple and rapid manner by punching from a plate, which scraper elements have a sufficient durability owing to their special profile.

For a better understanding of the invention and to show how the same may be carried into effect, reference will now be made, by way of example, to an embodiment shown in the accompanying drawings, in which

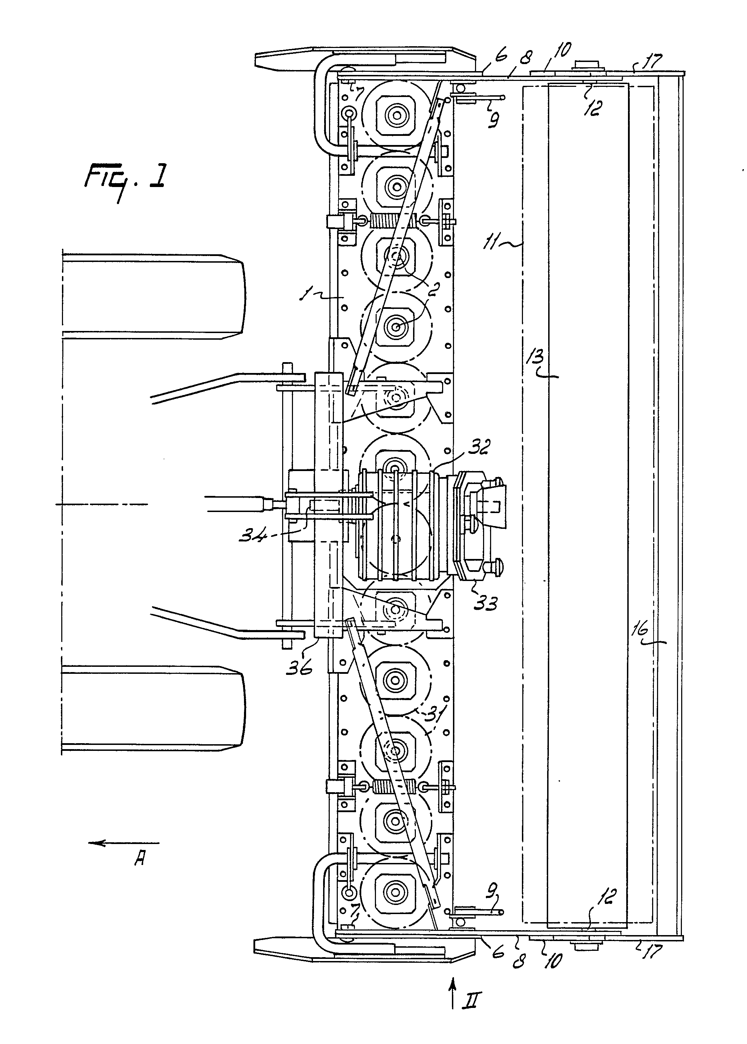

Figure 1 is a plan view of a soil cultivating machine comprising a construction according to the invention;

Figure 2 is a side view of the machine, taken in the direction of the arrow II in Figure 1;

Figure 3 is, to an enlarged scale, a view taken in the direction of the arrow III in Figure 2;

Figure 4 is a view taken on the line IV-IV in Figure 3, and

Figure 5 shows how parts of the scraper member arm can be produced from a strip of plate-shaped material.

The implement shown in the drawings concerns a soil cultivating machine, in particular one for the preparation of a seed bed.

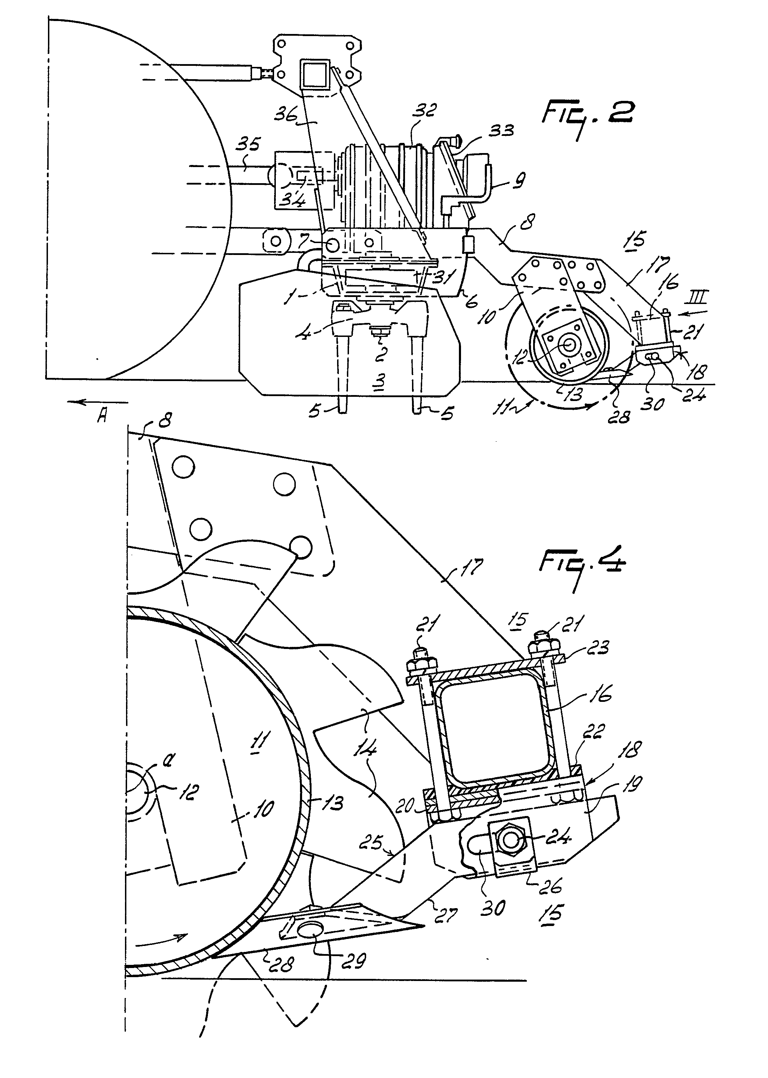

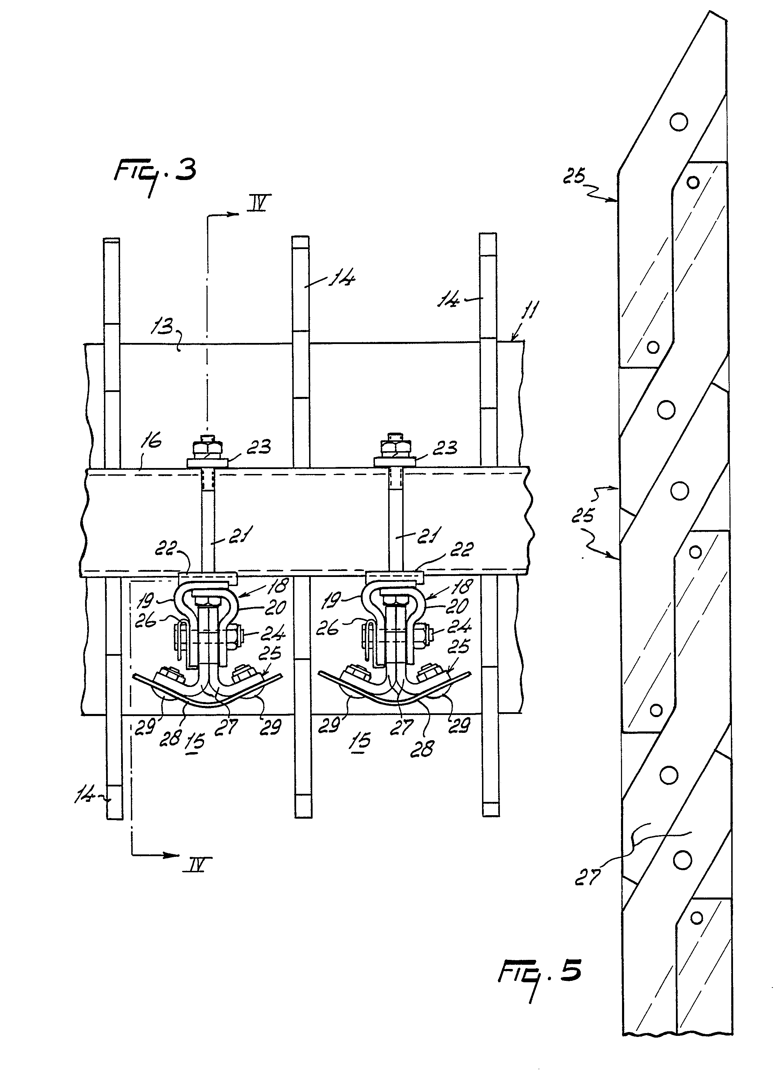

The machine comprises a box-like frame portion 1 which extends transversely to the direction of operative travel A and is located at least substantially horizontally. Inside the box-like frame portion 1 there are supported at equal interspaces of preferably 25 cms the upwardly directed, preferably vertical, shafts 2 of soil working members 3. At its end projecting from the bottom side of the frame portion 1, the shaft 2 of each soil working member 3 is provided with an at least substantially horizontal carrier 4. Near its ends, each carrier 4 is fitted with downwardly extending soil working elements 5 constituted by tines. The ends of the box-like frame portion 1 are closed by means of plates 6 which extend at least substantially parallel to a vertical plane in the direction of operative travel A of the machine. Near its leading side, each of the plates 6 is provided with a transverse pin 7, the arrangement being such that the longitudinal centre lines of the respective transverse pins 7 are in alignment. About each of the pins 7 there is arranged freely pivotably an arm 8 which extends rearwardly along the inner side of a plate 6. Near the rear side of the frame portion 1 there is arranged an adjusting device 9, by means of which each arm 8 can be adjusted to and locked in a plurality of positions, the adjusting device 9 being designed as a threaded spindle. Near its rear side, each of the arms 8 is provided with an obliquely downwardly and rearwardly extending support 10. Between the supports 10 there is supported freely rotatably a roller 11 by means of shafts 12 and bearings accommodated in bearing housings. The roller 11 comprises a cylindrical portion 13 which is provided with crowns of cams 14 arranged at equal interspaces. At the rear side there are provided between the crowns of cams 14 scraper members 15 which are attached to a box-like carrier beam 16, which carrier beam 16 is arranged between the ends of the supports 17 fitted to the rear sides of the arms 8. As is apparent from Figures 2 and 4, the carrier beam 16 has an angular, preferably square, cross-section and is arranged such that the upwardly directed sides incline slightly forwardly. The lower side of the carrier beam 16 is located at the level of the rotational axis a of the roller 11. At the lower side of the carrier beam 16 there is arranged a support 18 for each of the scraper members 15. Each support 18 is U-shaped having downwardly directed legs and includes two portions 19 and 20, each of which have a downwardly extending part, which parts are at least substantially parallel to each other and constitute the legs of the U-shaped support. The said parts merge via a curve into at least substantially horizontal parts which constitute the connection between the legs of the U-shaped support 18. When a support 18 is mounted, the curved parts of the portions 19 and 20 are clamped against each other by means of bolts 21 (Figure 3). The attachment for a support 18 furthermore includes a filling piece 22 which may be made of synthetic resin material, is adapted to the profile of the carrier beam 16 and is clamped against the lower side thereof. The attachment furthermore includes a clamping piece 23 which bears against the upper side of the carrier beam 16. Between the legs of each U-shaped support 18 formed in the above-described manner there is clamped an arm 25 of a scraper member 15 by means of a transverse bolt 24. In this connection, at one side there is present a U-shaped locking device 26 which is bent from plate material and is provided with an aperture to receive the hexagonal head of the bolt 24, and which locking device by means of a hooked portion bears against the lower side of a portion 19 of the support 18 (Figure 3). By means of the locking device 26, the bolt 24 is prevented from turning along when the nut is unscrewed. Each arm 25 comprises an at least substantially horizontal portion which is located between the legs of the U-shaped support 18 and, near the leading side thereof, merges into an obliquely downwardly and forwardly directed portion which extends to between the crowns of cams 14 (Figure 4). Each arm 25 includes two strips 27 arranged against each other, which strips 27 at the leading side of the obliquely downwardly and forwardly extending portion by means of folding lines are bent over an angle of more than 90° (see Figures 3 and 4) so as to provide supporting surfaces arranged in the shape of a V, against the lower sides of which surfaces scraper elements 28 are mounted by means of bolts 29. The scraper element 28 is formed from plate material and, as is apparent from Figure 3, has a V-shaped cross-section, there being enclosed between the legs of the V an angle of approximately 150° in agreement with the shape of the supporting surfaces of the bent portions of the strips 27 of the arm 25. The front and rear sides of the scraper element 28 extend pointedly, the arrangement being such that the shape of these sides is adapted to the curve of the cylindrical portion 13 of the roller 11 (Figure 4). The width of a scraper element 28 is at least substantially equal to the distance between two crowns of cams 14 (Figure 3). When the scraper element 28 has been reduced too far at its front side owing to wear, it can be turned through 180° after removal of the bolts 29, so that the identically designed rear side can be brought against the cylindrical portion 13. The portions of the support 18 are provided with slots 30 extending in the longitudinal direction of the horizontal portion of the arm 25 of a scraper member 15, in which slots 30 the bolt 24 is slidable, the arrangement being such that the arm 25 can be moved in its longitudinal direction forwardly and rearwardly, respectively, thereby obtaining the most favourable position of the scraper element 28.

As a starting material for the manufacture of the strips 27, of which an arm 25 is made, can be used a strip of plate material, from which the strips 27 can be obtained by punching in a manner as indicated in Figure 5 and be provided with the folding lines via which the supporting surfaces for the scraper element 28 are formed. In the above-described manner, the manufacture of the respective arms 25, of the scraper members 15 and of the scraper elements 28 can be effected quickly and cheaply, while, due to the fact that for the attachment of the arms 25 and of the scraper elements 28 there are used only bolt connections, and that the U-shaped supports 18 are made up of two plate-shaped portions, the entire assembly can be constructed in a fast and cheap manner.

Inside the box-like frame portion 1, each of the shafts 2 is provided with a pinion 31, the arrangement being such that the pinions 31 on the shafts 2 of adjacent soil working members 3 are in driving connection with each other. Near the centre of the box-like frame portion 1, the shaft 2 of a soil working member 3 is extended and reaches by means of this extension into a gear box 32, inside which the shaft is in driving connection via a bevel gear transmission to a shaft which extends in the direction of operative travel A and, via a speed variator 33 located at the rear side of the gear box 32, is in driving connection to a superjacent shaft 34 which, seen in plan view, is located in the centre of the box-like frame portion 1 and extends in the direction of operative travel A. The shaft 34 projects from the gear box 32 at the front side and can be connected to the power take-off shaft of a tractor via an intermediate shaft 35. Near its front side, the box-like frame portion 1 is fitted with a trestle 36 including a three-point connection for coupling the machine to the three-point lifting hitch of a tractor.

The machine as described in the foregoing operates as follows:

During operation, the machine is connected to the three-point lifting hitch of a tractor by means of the trestle 36 and, during movement in a direction indicated by the arrow A, the respective soil working members 3 are driven such from the power take-off shaft of the tractor via the intermediate shaft 35 and the above-described transmission that two adjacent soil working members 3 rotate in opposite directions, whereby their downwardly directed soil working elements 5 cultivate at least contiguous strips of soil. By means of the roller 11, which supports the machine during operation, it is possible to set the working depth of the soil working members 3. In order to be able to optimally maintain the effect of the roller 11, which is designed as a packer roller, there are fitted the above-described scraper members 15, of which the scraper elements 28 by means of their front sides are located near or against the cylindrical portion 13 in a point where a line therethrough and through the rotational axis a of the roller includes an angle of more than 40° with a horizontal plane through the rotational axis a of the roller. As has been stated in the foregoing already, the two opposite, pointed ends of the relevant scraper elements 28 can be employed, so that the life of these scraper elements is prolonged considerably. In addition, the manufacture of the scraper elements is simple and cheap, because they are bent in the shape of a V from plate material. The same holds good for the arm 25 to which the scraper elements 28 are arranged, as well as for the attachment of the arm 25 by means of the U-shaped supports consisting of two portions 19 and 20, which supports can be arranged easily at the carrier beam 16 in the above-described manner.

## Claims

1. A soil cultivating machine comprising at least one roller (11) to work the soil as well as scraper members (15), characterized in that a scraper member (15) includes a plurality of parts which are interconnected otherwise than through welding.

2. A soil cultivating machine as claimed in claim 1, characterized in that a scraper member (15) includes an arm (25) consisting of two parts (27) arranged alongside each other.

3. A soil cultivating machine as claimed in claim 1 or 2, characterized in that a scraper member arm (25) is arranged in a U-shaped support (18), the legs of which are detachable relative to each other.

4. A soil cultivating machine as claimed in claim 3, characterized in that the U-shaped support (18) is arranged at a box-like carrier (16), while between the box-like carrier (16) and the support (18) there is arranged a filling piece (22) that is adapted to the profile of the box-like carrier (16).

5. A soil cultivating machine as claimed in claim 3 or 4, characterized in that a U-shaped support (18) includes two portions (19, 20), the at least substantially parallel parts of which constitute the legs of the support (18), while the at least substantially hooked parts thereof are clamped against each other.

6. A soil cultivating machine as claimed in claim 4 and 5, characterized in that the hooked and clamped together parts of the portions (19, 20) of the U-shaped support (18) are mounted on a box-like carrier (16) by means of a filling piece (22).

7. A soil cultivating machine as claimed in claim 5 or 6, characterized in that a scraper member arm (25) is arranged slidably between the separate portions (19, 20) of the U-shaped support (18).

8. A soil cultivating machine as claimed in claim 7, characterized in that the slidable connection is effected by means of a bolt (24) which is slidable in a slot (30) extending in the longitudinal direction of the arm (25).

9. A soil cultivating machine as claimed in claim 7 or 8, characterized in that an at least substantially horizontally extending part of the arm (25) is arranged between the legs of the U-shaped support (18), which part near the front side of the U-shaped support (18) merges into an obliquely forwardly and downwardly extending part.

10. A soil cultivating machine as claimed in any one of claims 2 to 9, characterized in that the arm (25) consists of two strips (27) arranged against each other, the front side of which is provided with a curved part constituting a support for the application of a scraper element (28).

11. A soil cultivating machine as claimed in claim 10, characterized in that, seen in the longitudinal direction of the arm (25), the supporting surfaces of the respective strips (27) are arranged in the shape of a V relative to each other for the attachment of a scraper element (28).

12. A soil cultivating machine as claimed in claim 11, characterized in that a scraper element (28) is bent in the shape of a V from a plate.

13. A soil cultivating machine as claimed in claim 12, characterized in that the V-shaped scraper element (28) made from plate has identical front and rear sides which extend in the shape of a V forwardly and rearwardly, respectively.

14. A soil cultivating machine as claimed in claim 12 or 13, characterized in that the V-shaped cross-section of the scraper element (28) is such that the sides of the V include an angle of approximately 150˚ between them.

15. A soil cultivating machine as claimed in any one of claims 8 to 14, characterized in that a locking device (26) is provided for the bolt (24), by means of which the scraper member arm (25) is attached in the U-shaped support (18), the arrangement being such that the bolt (24) can be unscrewed by means of one hand.

FIG. 1

Fig. 2

Fig. 4

FIG.3

FIG.5

European Patent Office

**EUROPEAN SEARCH REPORT**

Application Number

EP 89 20 1448

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB-A-2 132 864 (VAN DER LELY) <br> * Figure 3; page 2, lines 63-120 * | 1 | A 01 B 29/04 |
| A | | 4 | |
| | --- | | |
| X | EP-A-0 150 080 (VAN DER LELY) <br> * Figure 2; page 7, lines 11-37; page 8, lines 1-14 * | 1 | |
| A | | 4 | |
| | ----- | | |

TECHNICAL FIELDS SEARCHED (Int. Cl.4)

A 01 B

The present search report has been drawn up for all claims

| Place of search | Date of completion of the search | Examiner |
|---|---|---|
| THE HAGUE | 06-09-1989 | CRAB E.A.C. |